Europäisches Patentamt

European Patent Office

Office européen des brevets

(19)

(11) Numéro de publication : **0 571 269 A1**

# (12) DEMANDE DE BREVET EUROPEEN

(21) Numéro de dépôt : **93401271.7**

(22) Date de dépôt : **18.05.93**

(51) Int. Cl.$^5$ : **G01N 21/41,** G01F 1/74

(30) Priorité : **20.05.92 FR 9206127**

(43) Date de publication de la demande :
**24.11.93 Bulletin 93/47**

(84) Etats contractants désignés :
**BE DE ES GB IT**

(71) Demandeur : **COMMISSARIAT A L'ENERGIE ATOMIQUE**
**31-33, rue de la Fédération**
**F-75015 Paris (FR)**

(72) Inventeur : **Vila, Jean-Claude**
**69, rue Jean et Marcel Fontenaille**
**F-13100 Aix en Provence (FR)**
Inventeur : **Berger, Roger**
**104, Rue Félicien Bec**
**F-04100 Manosque (FR)**

(74) Mandataire : **Ilgart, Jean-Christophe**
**c/o Société Brevatome, 25, rue de Ponthieu**
**F-75008 Paris (FR)**

(54) **Installation de mesure surfacique du taux de gaz d'un mélange diphasique parcourant un conduit cylindrique transparent.**

(57)    Installation de mesure surfacique du taux de gaz dans un mélange diphasique parcourant un conduit transparent (5).

Elle se compose d'un laser (1) et de lentilles (3, 4) pour créer un faisceau en forme de tranche, d'un conduit cylindrique transparent (5) monté sur la canalisation (6) et d'un détecteur de photons (7) situé au point de focalisation du faisceau qui est obtenu quand le taux de vide est nul. L'élévation du taux de vide provoque des déviations de certains des rayons et une diminution progressive de la focalisation et du signal mesuré, de sorte que le taux de gaz peut être évalué par une méthode de régression.

FIG. 1

EP 0 571 269 A1

L'invention se rapporte à une installation de mesure surfacique du taux de gaz d'un mélange diphasique, liquide et gazeux, parcourant un conduit transparent. Ce taux est souvent appelé "taux de vide".

Deux méthodes principales étaient connues auparavant pour une telle mesure : la méthode à la sonde optique et la méthode consistant à utiliser des rayons gamma.

Une sonde optique utilisable est une fibre optique qui se termine en pointe à l'intérieur du conduit. De la lumière est envoyée dans la fibre. Quand la pointe est enveloppée de gaz, la différence des indices de réfraction entre le verre et le gaz est telle que la lumière ne peut pas quitter la pointe et est réfléchie pour parcourir la fibre en sens inverse et être recueillie par un capteur de lumière. Le taux de gaz est identifié à la proportion du temps de mesure pendant laquelle cette situation existe. Mais la méthode est imprécise car elle ne mesure en réalité le taux de gaz que de façon ponctuelle, sur une ligne du mélange, et de plus la sonde est fragile et perturbe l'écoulement.

L'utilisation d'éléments radioactifs implique de connaître les facultés d'absorption du liquide et du gaz. Le rayonnement est émis à travers une tranche transversale de la conduite et l'intensité du rayonnement parvenant à traverser l'écoulement permet de calculer la proportion de la section qui est occupée par le gaz. Cette méthode fournit des résultats plus précis mais présente le désavantage de contaminer le fluide et une partie du conduit.

L'installation proposée en tant qu'invention, ainsi que la méthode correspondante, est entièrement nouvelle dans sa conception car elle combine de manière originale des éléments des deux méthodes connues : elle exploite les propriétés optiques différentes des deux fluides du mélange et en particulier la différence de leurs indices de réfraction tout en impliquant une mesure sur toute une section de la conduite, de manière analogue aux essais par irradiation. Mais la façon d'effectuer les mesures est entièrement différente car aucune mesure d'absorption du rayonnement n'est effectuée. On dévoile donc dans la suite de ce texte une installation appropriée à la réalisation effective de la méthode ainsi que les mesures concrètes à utiliser pour se servir utilement de l'invention.

L'installation conforme à l'invention est sous sa forme la plus générale caractérisée en ce qu'elle comprend une portion transparente du conduit, un moyen de projection d'un rayonnement lumineux plan à travers la portion transparente, le rayonnement ayant une ouverture lui permettant d'être focalisé sur un point au-delà de la portion transparente quand le taux de gaz est nul, un photo-détecteur placé au point de focalisation, et un moyen de mesure d'un signal émis par le photo-détecteur.

Le moyen de mesure est avantageusement agencé pour calculer la valeur efficace du signal émis par le photo-détecteur et décomposé en échantillons sur des périodes d'échantillonnage.

Le moyen de projection peut consister en un laser et en une lentille cylindrique.

On va maintenant décrire l'invention plus en détail à l'aide du commentaire des figures suivantes annexées à titre illustratif et non limitatif :
- la figure 1 est une vue générale de l'installation,
- la figure 2 est un détail agrandi de la figure 1,
- la figure 3 représente des signaux recueillis par le photo-détecteur, et
- la figure 4 représente le système électronique utilisé.

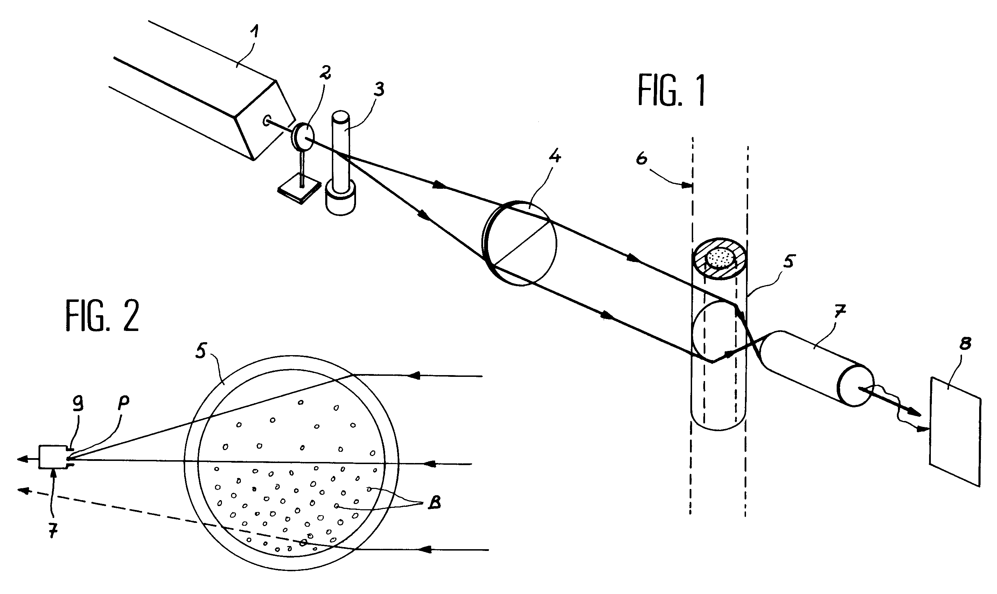

On distingue sur la figure 1 un laser 1 qui émet un faisceau lumineux concentré, un atténuateur optique 2 qui amoindrit la puissance de ce faisceau, une lentille cylindrique 3 verticale destinée à ouvrir le faisceau pour former un éventail plan, une lentille de focalisation 4 que le faisceau en éventail atteint par une face d'entrée convexe et qui est destinée à réduire l'ouverture du faisceau pour le rendre à largeur constante ou même légèrement convergent, un tube de verre 5 qui constitue une portion d'une canalisation 6 que le mélange diphasique parcourt, un photo-détecteur 7 et une chaîne de mesure 8 non representée en détail.

On voit sur la figure 2 que le faisceau plan traverse une tranche transversale du tube de verre 5 et le fluide diphasique que cette tranche contient. Si le fluide est un liquide homogène partiellement ou totalement transparent, on constate que les rayons du faisceau réfractés par la paroi du tube de verre 5 et par le fluide sont focalisés sur une tache presque ponctuelle P, et on dispose le photo-détecteur 7 à l'emplacement de cette tache P. Le photo-détecteur 7 est muni d'un collimateur 9 qui permet en réalité de mesurer l'énergie totale produite sur une petite surface.

Si maintenant le mélange est diphasique, c'est-à-dire que des bulles de gaz B se mêlent au liquide, les rayons qui traversent ces bulles B subissent des réfractions supplémentaires qui les dévient et les font passer à l'écart du collimateur 9. Plus les bulles B sont nombreuses et volumineuses, plus cette proportion de rayons déviés est importante et plus l'énergie mesurée par le photo-détecteur 7 décroît.

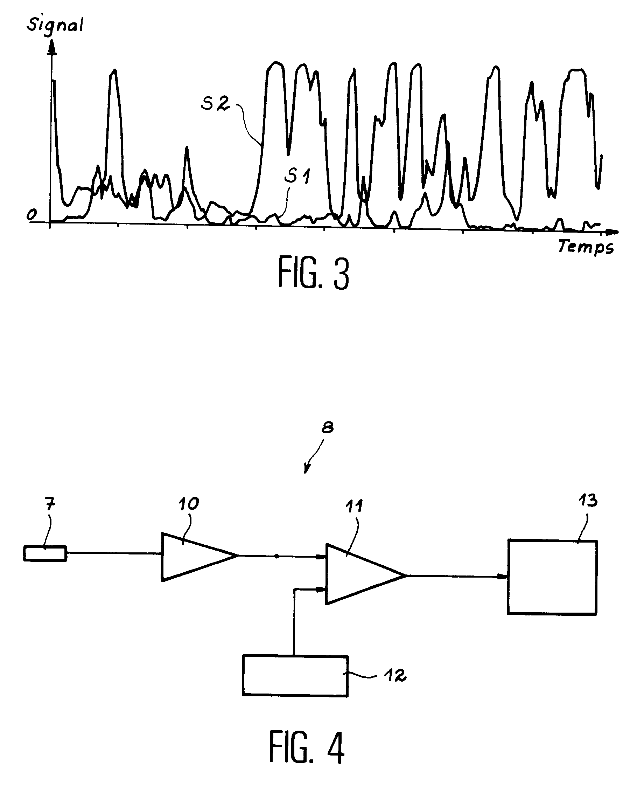

On représente sur la figure 3 l'évolution dans le temps des signaux obtenus pour deux taux de gaz, après qu'une soustraction de la valeur du signal obtenu à taux de gaz nul et une inversion du résultat ont été entreprises : les arrivées de bulles de gaz en plus grande quantité apparaissent sous forme de pics de hauteurs et de longueurs (durées) variables qui apparaissent à des fréquences irrégulières. Les pics sont à la fois plus élevés, plus longs et plus nombreux pour la courbe S2 qui fut enregistrée pour un taux de gaz plus important que pour la courbe S1 (4,03% au lieu de 0,8%). On observe d'ailleurs un écrêtage des pics qui reflète une saturation de la chaîne de mesure 8, sans que les conséquences soient cependant très sensibles dans les résultats finaux. Un échantillonnage statistique portant sur une durée choisie à l'avance est nécessaire. La saturation de la chaîne de mesure 8 peut toujours être évitée par un choix judicieux de ses éléments.

Le système électronique qui compose la chaîne de mesure 8 est détaillé à la figure 4. On trouve un amplificateur 10 relié à la borne de sortie du photo-détecteur 7, un soustracteur 11 où le signal produit par l'amplificateur 10 est soustrait d'un signal uniforme fourni par un générateur 12 (ce signal est égal à celui qui est fourni par l'amplificateur à taux de gaz nul), et enfin un analyseur de signaux 13 qui est apte à effectuer un échantillonnage du signal recueilli pendant la durée de la mesure et à extraire la valeur efficace de ce signal, c'est-à-dire la valeur constante qui produirait la même puissance dans une résistance en supposant que le signal est un signal de tension.

Les inventeurs ont en effet constaté que la valeur efficace V du signal pouvait être corrélée très simplement au taux de gaz. Une valeur efficace nulle correspond à un taux de gaz nul (grâce au soustracteur 12) et la valeur efficace croît sans cesse avec le taux de gaz. La relation est même sensiblement linéaire de sorte qu'on peut se contenter d'une régression linéaire pour déduire le taux de gaz T à partir du calcul d'une valeur efficace de signal. Dans les expériences effectivement menées, avec des taux de gaz inférieurs à 4,03% et pour du gaz divisé en bulles de petit calibre bien réparties dans le liquide, la relation V=1,895T+0,654 donna la meilleure corrélation, mais des corrélations encore meilleures sont obtenues si on accepte d'effectuer des régressions avec des fonctions non linéaires : pour les mêmes résultats expérimentaux, la loi empirique la plus satisfaisante était

$$V = 23{,}514 \, e^{\frac{1}{9{,}077}(Lnt - 4{,}519)^2}.$$

T est exprimé en unités de pourcentage dans ces formules. Des essais préliminaires sont nécessaires pour chaque appareillage afin d'évaluer les coefficients de régression.

**Revendications**

1. Installation de mesure surfacique de taux de gaz d'un mélange diphasique parcourant une canalisation (6), caractérisée en ce qu'elle comprend une portion transparente (5) de la canalisation, un moyen de projection (1 à 4) d'un rayonnement lumineux plan à travers la portion transparente, le rayonnement ayant une ouverture lui permettant d'être focalisé sur un point (P) au-delà de la portion transparente quand le taux de gaz est nul, un photo-détecteur (7) placé au point de focalisation, et un moyen de mesure (8) d'un signal émis par le photo-détecteur.

2. Installation selon la revendication 1, caractérisée en ce que le moyen de mesure est agencé pour calculer la valeur efficace du signal émis par le photo-détecteur (7), décomposé en échantillons sur des périodes d'échantillonnage.

3. Installation selon l'une quelconque des revendications 1 ou 2, caractérisée en ce que le moyen de projection consiste en un laser (1) et une lentille cylindrique (3).

FIG. 1

FIG. 2

EP 0 571 269 A1

Signal

S 2

S 1

0

Temps

FIG. 3

8

7    10    11    13

12

FIG. 4

**Office européen
des brevets**

**RAPPORT DE RECHERCHE EUROPEENNE**

Numero de la demande

EP    93 40 1271

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-5 110 208 (S.SREEPADA ET AL.) 5 Mai 1992 * colonne 3 - colonne 4 * | 1 | G01N21/41 G01F1/74 |
| X | US-A-4 736 590 (F.MONTICELLI) 12 Avril 1988 * colonne 5 - colonne 9 * | 1 | |
| X | PATENT ABSTRACTS OF JAPAN vol. 12, no. 451 (P-791)(3298) 28 Novembre 1988 & JP-A-63 173 921 ( NIPPON ATOM ) 18 Juillet 1988 * abrégé * | 1 | |
| A | DE-A-3 243 719 (BASF AG) 30 Mai 1984 * page 2 - page 5 * | 2 | |
| A | US-A-4 637 719 (A.HERMAN) 20 Janvier 1987 * colonne 3 - colonne 5 * | 3 | DOMAINES TECHNIQUES RECHERCHES (Int. Cl.5) |
| A | S.REED ET AL. 'LEOS 89 LASERS ELECTROOPTICS S.A.M.C.P.' 20 Octobre 1989 , IEEE FIBER OPTIC VOID FRACTION SENSOR * page 275 - page 276 * | 1 | G01N G01F |
| A | REVIEW OF SCIENTIFIC INSTRUMENTS vol. 56, no. 5, 1 Mai 1985, pages 746 - 751 G.BESIO ET AL. 'AUTOMATED SYSTEM FOR THE CHARACTERIZATION OF LIQUID FOAM' * page 746 - page 748 * | 1 | |

Le présent rapport a été établi pour toutes les revendications

| Lieu de la recherche | Date d'achèvement de la recherche | Examinateur |
|---|---|---|
| LA HAYE | 06 SEPTEMBRE 1993 | BOEHM C.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)